# EUROPEAN PATENT SPECIFICATION

(11) **EP 3 173 816 B1**
(45) Date of publication and mention of the grant of the patent: **09.01.2019**
(21) Application number: 16197019.9
(22) Date of filing: 03.11.2016
(51) Int. Cl.: G01S 17/42, G01S 7/481

(54) **DISTANCE MEASURING DEVICE**
ENTFERNUNGSMESSVORRICHTUNG
DISPOSITIF DE MESURE DE DISTANCE

(30) Priority: 06.11.2015 JP 2015218078; 06.11.2015 JP 2015218063
(43) Date of publication of application: 31.05.2017
(73) Proprietor: AISIN SEIKI KABUSHIKI KAISHA, Aichi 448-8650 (JP)
(72) Inventor: SAIKI, Shunsuke, Kariya-shi, Aichi 448-8650 (JP)
(74) Representative: TBK

(56) References cited:
- EP-A2- 1 300 715
- US-A1- 2011 235 018

## Description

### TECHNICAL FIELD

This disclosure relates to a distance measuring device.

### BACKGROUND DISCUSSION

A distance measuring device which measures a distance to a distance measuring target by projecting laser light or the like from a light source as distance measuring light to the distance measuring target, and by receiving the distance measuring light reflected by the distance measuring target by a light receiving member, is known. For example, the distance measuring device projects the light to the distance measuring target while sweeping the distance measuring light by rotating a reflection member having a plurality of reflection surfaces.

The distance measuring device includes an optical member, such as a lens, for converting the light into parallel light by suppressing dispersion of the distance measuring light, and a light condensing member which condenses the distance measuring light to the light receiving member (JP2006-349449A (Reference 1) and JP2005-221336A (Reference 2)). The distance measuring device can sweep the distance measuring light in a plurality of ranges (hereinafter, scanning range) along the direction in which the reflection member rotates, by reflecting the distance measuring light by the plurality of reflection surfaces (JP2011-203122A (Reference 3) and JP2009-103482A (Reference 4)).

However, in the distance measuring device of the related art, since the optical member and the light condensing member are disposed to substantially overlap each other, in general, a partially circular light condensing member which allows the light to transmit by removing a part of the light condensing member configured of a circular light condensing lens or the like, is used. In the light condensing member, there is a problem that the distance measuring light reflected by the distance measuring target cannot be sufficiently condensed. In addition, in the distance measuring device of the related art, since lengths of the plurality of scanning ranges scanned by the distance measuring light are the same as each other, there is a problem that a degree of freedom of a range in which the distance can be measured is low.
Further prior art may be found in e.g. document US 2011/0235018 A1 disclosing a scanning-type distance measuring apparatus, and document EP 1 300 715 A2 describing an opto-electronic measurement apparatus having a laser scanner.

### SUMMARY

A distance measuring device according to an aspect of this disclosure is defined in claims 1 to 4.

As in this configuration, in the distance measuring device, since the optical member and the transmissive portion are disposed at positions different from each other, the size of the transmissive portion is not restricted. Therefore, since it is possible to reduce the size of the transmissive portion to be smaller than the optical member, it is possible to enlarge a region of the light condensing member which can condense the light. As a result, since the light condensing member can sufficiently condense the distance measuring light, measuring performance can be improved in the distance measuring device.

In the distance measuring device according to the aspect of this disclosure, the transmissive portion may be a cutout provided in an outer circumferential portion of the light condensing member. With this configuration, it is possible to more easily provide the transmissive portion.

In the distance measuring device according to the aspect of this disclosure, the optical member may be a lens which suppresses dispersion of the distance measuring light. With this configuration, it is possible to suppress dispersion of the distance measuring light by the optical member, and to more efficiently use the distance measuring light in measuring the distance.

In the distance measuring device according to the aspect of this disclosure, the reflection member may have a plurality of reflection surfaces, and the distance measuring device may further include a diaphragm which shortens a length of a section of the distance measuring light in the rotational direction of the reflection member to be shorter than a length of the distance measuring light in the direction orthogonal to the rotational direction. With this configuration, the distance measuring device can shorten the time period during which the distance cannot be measured as the distance measuring light is projected to a boundary between the plurality of reflection surfaces.

In the distance measuring device according to the aspect of this disclosure, the reflection member may have a plurality of reflection surfaces, a light shielding portion which is provided on the periphery of the transmissive portion, and shields the distance measuring light, may further be provided, and the light shielding portion and the transmissive portion may shorten a length of a section of the distance measuring light in the rotational direction of the reflection member to be shorter than a length of the distance measuring light in the direction orthogonal to the rotational direction. With this configuration, the distance measuring device can shorten the time period during which the distance cannot be measured as the distance measuring light is projected to a boundary between the plurality of reflection surfaces by the light shielding portion and the transmissive portion.

A distance measuring device according to an example useful for understanding the invention includes: a housing; a light source which is provided in the housing, and projects distance measuring light; a reflection member which is provided in the housing, and has a first reflection surface which reflects the distance measuring light projected by the light source to the outside of the housing, and a second reflection surface whose area is different from that of the first reflection surface; a rotating portion which has a rotating shaft that supports the reflection member, and rotates the reflection member around the rotating shaft; and a light receiving member which receives the distance measuring light which is reflected by a distance measuring target and is reflected to the reflection member, and converts the distance measuring light into an electric signal.

Since the area of the first reflection surface is different from the area of the second reflection surface, the distance measuring device can make a distance measuring range of the distance measuring light reflected by the first reflection surface, and a distance measuring range of the distance measuring light reflected by the second reflection surface, different from each other. Accordingly, the distance measuring device can improve a degree of freedom of the distance measuring range.

In the distance measuring device according to the example useful for understanding the invention, the rotating shaft may be inclined with respect to the light projection direction of the distance measuring light projected by the light source. With this configuration, the distance measuring device can sweep the distance measuring light reflected by the first reflection surface and the second reflection surface which rotate around the rotating shaft, in a shape of a curve.

In the distance measuring device according to the example useful for understanding the invention, the rotating shaft may be inclined with respect to the vertical direction, and may be inclined in the direction to the distance measuring target. With this configuration, the distance measuring device can sweep the distance measuring light reflected by the first reflection surface and the second reflection surface which rotate around the rotating shaft, along a curved line in a projected or recessed shape in the vertical direction.

In the distance measuring device according to the example useful for understanding the invention, the light source may be inclined with respect to the vertical direction, and may project the distance measuring light in the light projection direction inclined in the direction to the distance measuring target. With this configuration, the distance measuring device can sweep the distance measuring light reflected by the first reflection surface and the second reflection surface which rotate around the rotating shaft inclined with respect to the light projection direction, along a curved line in a projected or recessed shape in the vertical direction.

In the distance measuring device according to the example useful for understanding the invention, the rotating shaft or the light projection direction of the distance measuring light projected by the light source may be inclined in a direction intersecting the direction to the distance measuring target. With this configuration, the distance measuring device can sweep the distance measuring light reflected by the first reflection surface and the second reflection surface which rotate around the rotating shaft, by biasing the distance measuring light in any direction intersecting the distance measuring direction.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a longitudinally sectional view illustrating the entire configuration of a distance measuring device of a first embodiment;
Fig. 2 is a perspective view of a reflection member;
Fig. 3 is a perspective view of a light condensing member;
Fig. 4 is a plan view illustrating a positional relationship between an optical member and a transmissive portion of the light condensing member;
Fig. 5 is a plan view illustrating a trace and a distance measuring range of distance measuring light;
Fig. 6 is a front view illustrating the trace and the distance measuring range of the distance measuring light;
Fig. 7 is a perspective view of a reflection member of Modification Example 1;
Fig. 8 is a sectional view illustrating the entire configuration of a distance measuring device of Modification Example 2;
Fig. 9 is a sectional view illustrating the entire configuration of a distance measuring device of Modification Example 3;
Fig. 10 is a sectional view illustrating the entire configuration of a distance measuring device of a first example useful for understanding the invention;
Fig. 11 is a perspective view of a light condensing member of the first example useful for understanding the invention;
Fig. 12 is a plan view of the light condensing member of the first example useful for understanding the invention;
Fig. 13 is a sectional view illustrating the entire configuration of a distance measuring device according to Modification Example 4;
Fig. 14 is a view illustrating disposition of a light source and a diaphragm according to Modification Example 5;
Fig. 15 is a view illustrating a light source according to Modification Example 6;
Fig. 16 is a view illustrating a rotating shaft of a rotating portion according to Modification Example 7; and
Fig. 17 is a sectional view illustrating the entire configuration of a distance measuring device according to a second example useful for understanding the invention.

### DETAILED DESCRIPTION

In the embodiments, the examples useful for understanding the invention, or modification examples which are illustrated as examples hereinafter include similar configuration elements. Accordingly, hereinafter, similar configuration elements will be given the same reference numerals, and overlapping description thereof will be partially omitted. Parts included in the embodiments, the examples useful for understanding the invention, or the modification examples can be configured to be replaced with parts which correspond to other embodiments, examples useful for understanding the invention, and the modification examples. In addition, configurations or positions of the parts included in the embodiments, the examples useful for understanding the invention and the modification examples are similar to those of the other embodiments and the modification examples insofar as there is no particular remark otherwise stated.

A distance measuring device of the embodiments and the examples useful for understanding the invention increases light which can be condensed by a light condensing member by shifting a position of an optical member and the light condensing member, more efficiently condenses the light reflected by the distance measuring target, and enlarges a region in which a distance can be measured. In addition, the distance measuring device of the embodiments and the examples useful for understanding the invention makes distance measuring ranges caused by distance measuring light different for each reflection surface by making areas of a plurality of reflection surfaces provided in a reflection member different from each other, and improves a degree of freedom of the distance measuring range.

### First Embodiment

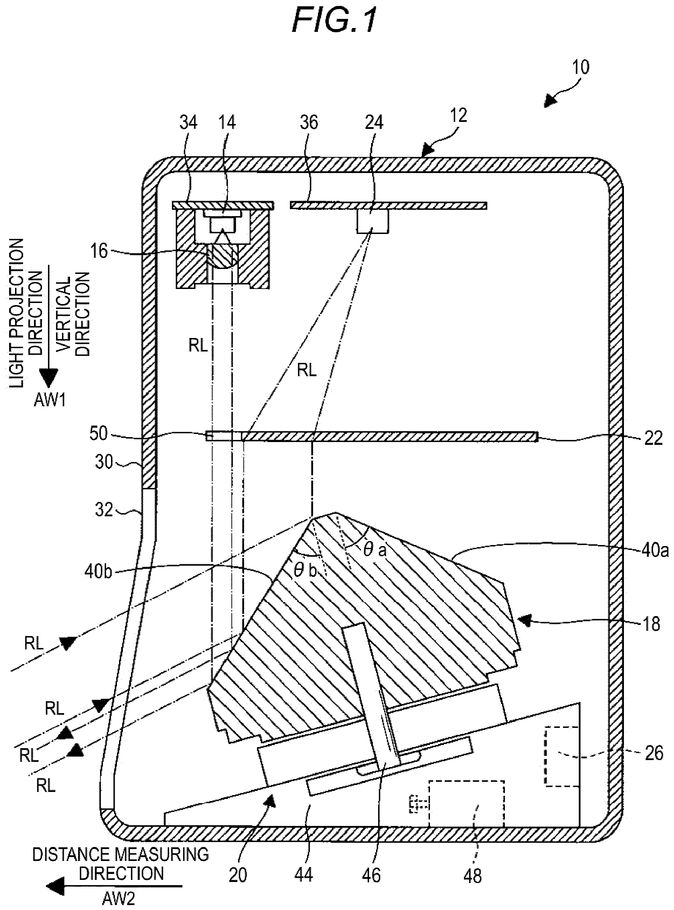

Fig. 1 is a longitudinal sectional view illustrating the entire configuration of a distance measuring device 10 of a first embodiment. Fig. 1 is a view when the distance measuring device 10 is viewed from a side in a case where the direction to the distance measuring target is forward. The distance measuring device 10 is, for example, provided in an outer circumferential portion of a vehicle or the like, and measures a distance to the distance measuring target, such as a human or a thing, on the periphery.

As illustrated in Fig. 1, the distance measuring device 10 of the first embodiment includes a housing 12, a light source 14, an optical member 16, a reflection member 18, a rotating portion 20, a light condensing member 22, a light receiving member 24, and a control portion 26.

The housing 12 includes a main body portion 30 and a housing window 32.

The main body portion 30 is configured of, for example, a resin. The main body portion 30 is formed in a hollow three-dimensional shape. The main body portion 30 accommodates and holds the light source 14, the optical member 16, the reflection member 18, the rotating portion 20, the light condensing member 22, and the light receiving member 24. The main body portion 30 includes holding members 34 and 36 which hold the light source 14 and the light receiving member 24.

The housing window 32 is provided in a region through which distance measuring light RL transmits on a surface which configures the main body portion 30. The housing window 32 is configured of, for example, a resin or glass through which the distance measuring light RL can transmit. Furthermore, the housing window 32 may be open.

The light source 14 projects the distance measuring light RL for measuring the distance to the distance measuring target. The light source 14 is held and fixed to the holding member 34, and is provided in the housing 12. The light source 14 has a laser device which can project laser light of a semiconductor laser element or the like. The light source 14 projects the laser light in the direction illustrated by an arrow AW1 as the distance measuring light RL based on a light projection signal from the control portion 26. The one direction is the light projection direction. The light projection direction of the embodiment is parallel to the vertical direction, and is downward. In addition, the direction perpendicular to the light projection direction is the horizontal direction. In the horizontal direction, the direction illustrated by an arrow AW2 is the direction to the distance measuring target (hereinafter, the distance measuring direction). More specifically, the distance measuring direction is the direction along a center line in the distance measuring range which widens in a shape of a fan in a plan view.

By adding optical action to the distance measuring light RL, the optical member 16 projects the distance measuring light RL to the reflection member 18. An example of the optical action is refraction. The optical member 16 is disposed in the light projection direction of the distance measuring light RL of a main path in which the light source 14 projects the distance measuring light RL. In other words, the optical member 16 is disposed on a course of the distance measuring light RL. Furthermore, in the following description, a course by which the distance measuring light RL reaches the distance measuring target is the main path, and a course after the distance measuring light RL is reflected by the distance measuring target is a return path. The optical member 16 is disposed at a position closer to the light source 14 than the light condensing member 22 in the light projection direction. An example of the optical member 16 is a collimator lens. The optical member 16 refracts the distance measuring light RL, converts the distance measuring light RL into parallel light, and projects the distance measuring light RL to the reflection member 18. Accordingly, the optical member 16 suppresses dispersion (or diffusion) of the distance measuring light RL.

The reflection member 18 reflects the distance measuring light RL projected by the light source 14 to the distance measuring target on the outside of the housing 12, and reflects the distance measuring light RL reflected by the distance measuring target to the direction to the light condensing member 22 and the light receiving member 24. The reflection member 18 is provided in the housing 12. The reflection member 18 is disposed on the course of the distance measuring light RL projected from the light source 14. The reflection member 18 receives the distance measuring light RL which is projected from the light source 14, passes through the optical member 16, and becomes the parallel light. The reflection member 18 is configured of, for example, a polygon mirror which can deflect the received distance measuring light RL. The reflection member 18 has a plurality of reflection surfaces 40a and reflection surfaces 40b which reflect the distance measuring light RL to the distance measuring target on the outside of the housing 12. The reflection surfaces 40a and 40b are made of a material having high reflectivity, such as metal.

The reflection surfaces 40a and 40b are inclined with respect to the advancing direction (that is, the light projection direction) of the distance measuring light RL of the main path in which the light source 14 projects the distance measuring light RL. The reflection surfaces 40a and 40b reflect the distance measuring light RL of the main path to the outside on which the distance measuring target is present. In addition, the reflection surfaces 40a and 40b are inclined with respect to the advancing direction of the distance measuring light RL reflected by the distance measuring target on the outside in the return path. The reflection surfaces 40a and 40b reflect the distance measuring light RL of the return path to the direction to the light condensing member 22 and the light receiving member 24.

In the example illustrated in Fig. 1, the reflection member 18 includes the two reflection surfaces 40a and 40b. By the two reflection surfaces 40a and 40b, compared to a case where there are three or more surfaces, it is possible to enlarge the distance measuring range in the horizontal direction. An inclination angle θa of the reflection surface 40a is different from an inclination angle θb of the reflection surface 40b. Furthermore, the inclination angles θa and θb are angles between a rotating shaft 46 which will be described later and the reflection surfaces 40a and 40b. In the embodiment, the inclination angle θa is greater than the inclination angle θb.

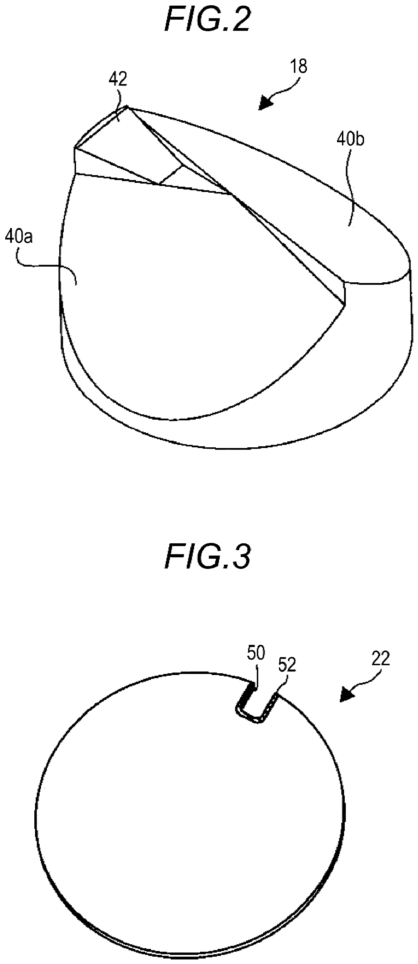

Fig. 2 is a perspective view of the reflection member 18. As illustrated in Fig. 2, the reflection member 18 is configured in a circular shape in a plan view. The reflection member 18 is configured in a partially columnar shape a part of which is removed along the direction of being inclined with respect to a center shaft. The reflection member 18 allows a surface formed by being removed from the columnar shape to function as the reflection surfaces 40a and 40b. The center shaft of the reflection member 18 configured in a partially columnar shape, matches the center shaft of the rotating shaft 46.

The reflection surfaces 40a and 40b are disposed along the circumferential direction of the reflection member 18. The reflection surfaces 40a and 40b are configured substantially in a shape of a fan in a plan view when viewed from the direction to the rotating shaft 46. A boundary between the reflection surface 40a and the reflection surface 40b is substantially along the radial direction of the reflection member 18. An area of the reflection surface 40a is different from an area of the reflection surface 40b. Accordingly, a region (or a length) in which the distance measuring light RL reflected by the reflection surface 40a is scanned, is different from a region (or a length) in which the distance measuring light RL reflected by the reflection surface 40b is scanned. In the embodiment, the area of the reflection surface 40a is smaller than the area of the reflection surface 40b.

The reflection member 18 further has a correction surface 42. The correction surface 42 reflects the distance measuring light RL to the light receiving member 24 without reflecting the distance measuring light RL projected from the light source 14 to the outside. Accordingly, the control portion 26 can measure the distance (hereinafter, a correction distance) between the light source 14 and the light receiving member 24. The control portion 26 can more accurately measure the distance by subtracting the correction distance from a value obtained by measuring the distance to the distance measuring target.

Returning to Fig. 1, the rotating portion 20 supports the reflection member 18 to be rotatable, and rotates. The rotating portion 20 includes a base 44, the rotating shaft 46, and a driving member 48.

The base 44 is fixed to one surface (for example, a bottom surface) of the housing 12.

The rotating shaft 46 is formed in a columnar shape. The rotating shaft 46 is supported by the base 44 to be rotatable. The rotating shaft 46 is inclined with respect to the light projection direction of the distance measuring light RL projected by the light source 14. For example, the rotating shaft 46 is inclined with respect to the vertical direction, and is inclined in the direction (that is, the direction to the housing window 32) of the distance measuring target. The rotating shaft 46 supports the reflection member 18. Accordingly, the reflection member 18 is supported by the base 44 and the housing 12 which can rotate by the rotating shaft 46. The rotating shaft 46 is, for example, fixed along the center shaft of the reflection member 18.

The driving member 48 is configured of, for example, a motor. The driving member 48 outputs a rotation driving force to the rotating shaft 46 based on a driving signal output by the control portion 26. Accordingly, the driving member 48 rotates the reflection member 18 together with the rotating shaft 46 around the center shaft of the rotating shaft 46.

The light condensing member 22 condenses the distance measuring light RL of the return path to the light receiving member 24. The light condensing member 22 is disposed on the course of the distance measuring light RL reflected by the reflection surfaces 40a and 40b of the reflection member 18. The light condensing member 22 receives the distance measuring light RL which is reflected by the distance measuring target on the outside of the housing 12, and is reflected by the reflection member 18. The light condensing member 22 is disposed to be substantially perpendicular to the light projection direction. The light condensing member 22 is configured of a light condensing lens which can condense the light. The light condensing member 22 is configured of, for example, a Fresnel lens. The light condensing member 22 condenses the received distance measuring light RL, and projects the distance measuring light RL to the light receiving member 24.

The light condensing member 22 includes a transmissive portion 50 on an outer circumferential portion. The transmissive portion 50 is provided on the distance measuring target side in the outer circumferential portion of the light condensing member 22. The optical member 16 and the transmissive portion 50 are disposed on one straight line which extends along the light projection direction from the light source 14. The transmissive portion 50 is disposed at a position different from that of the optical member 16 in the light projection direction of the distance measuring light RL projected by the light source 14. The transmissive portion 50 is disposed, for example, further toward the downstream side in the light projection direction than the optical member 16.

Fig. 3 is a perspective view of the light condensing member 22. As illustrated in Fig. 3, the light condensing member 22 is configured substantially in a shape of a circular disk. The transmissive portion 50 is configured of a cutout which is provided in the outer circumferential portion of the light condensing member 22 by removing a part of the outer circumferential portion of the light condensing member 22. An outer circumferential side of the transmissive portion 50 is open. The transmissive portion 50 is formed in a U shape in a plan view. A length of the transmissive portion 50 along the radial direction of the light condensing member 22 is longer than a length of the transmissive portion 50 along the circumferential direction of the light condensing member 22.

The transmissive portion 50 allows the distance measuring light RL to transmit (or pass) therethrough without adding the optical action to the distance measuring light RL which is projected from the light source 14 and advances to the reflection member 18. In other words, the transmissive portion 50 allows the distance measuring light RL to transmit without light condensing and dispersion caused by the refraction.

The light condensing member 22 includes a light shielding portion 52 which is formed on the periphery of the transmissive portion 50. The light shielding portion 52 is configured of a material which can shield and absorb the light. For example, the light shielding portion 52 is configured of a black member which does not reflect the light, for example, black paint. Accordingly, the light shielding portion 52 absorbs light which is unnecessary for measuring the distance, such as the distance measuring light RL reflected by an inner surface or the like of the housing 12, and prevents the light receiving member 24 from receiving the light.

Since the light shielding portion 52 shields the light, the transmissive portion 50 and the light shielding portion 52 also function as the diaphragm of the distance measuring light RL of the main path in which the light source 14 projects the distance measuring light RL. Here, the transmissive portion 50 and the light shielding portion 52 have a shape which is long in the radial direction of the light condensing member 22, and is short in the circumferential direction. Therefore, the transmissive portion 50 and the light shielding portion 52 project the light to the reflection member 18 by narrowing down the section of the distance measuring light RL along the surface perpendicular to the light projection direction to be in a shape which is long in the radial direction of the light condensing member 22 and is short in the circumferential direction. In other words, the transmissive portion 50 and the light shielding portion 52 narrow down the distance measuring light RL so that the length of the section of the distance measuring light RL in the rotational direction of the reflection member 18 is shorter than the length of the section of the distance measuring light RL in the direction orthogonal to the rotational direction. The rotational direction of the reflection member 18 is also the circumferential direction of the reflection member 18 in a plan view. The direction orthogonal to the rotational direction of the reflection member 18 is also the radial direction of the reflection member 18 in a plan view. Therefore, the reflection member 18 receives the distance measuring light RL whose length in the direction intersecting (for example, orthogonal to) the boundary between the reflection surfaces 40a and 40b is short.

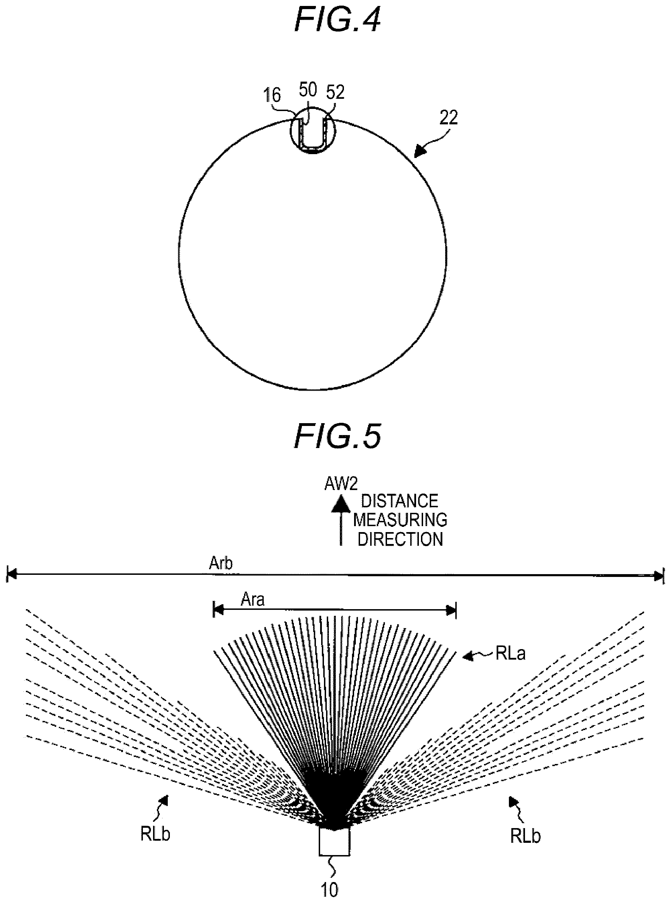

Fig. 4 is a plan view illustrating a positional relationship between the optical member 16 and the transmissive portion 50 of the light condensing member 22. As illustrated in Fig. 4, in a plan view, the optical member 16 is disposed to overlap the transmissive portion 50 of the light condensing member 22. The optical member 16 and the transmissive portion 50 are disposed at the same position in the direction orthogonal to the light projection direction.

Accordingly, in a case where the optical member 16 and the transmissive portion 50 are disposed at the same position in the light projection direction, it is needless to say that a restriction that a plane area of the transmissive portion 50 should be greater than a plane area of the optical member 16, is eliminated. Therefore, the plane area of the transmissive portion 50 can be smaller than the plane area of the optical member 16. As a result, a region in which the light condensing member 22 configured of a region other than the transmissive portion 50 can condense the distance measuring light RL is enlarged.

In addition, the transmissive portion 50 is provided on the distance measuring target side in the outer circumferential portion of the light condensing member 22. Accordingly, the light source 14 and the optical member 16 are disposed further toward the distance measuring target side than the light receiving member 24, and can reflect the distance measuring light RL of the main path by the outer circumferential portion of the reflection surfaces 40a and 40b which are close to the housing window 32. Therefore, a region of the housing window 32 through which the distance measuring light RL of the main path passes decreases. As a result, since it is possible to reduce the housing window 32, it is possible to improve designability while preventing the distance measuring light RL reflected by the housing window 32 from being reflected by the reflection member 18 and being received as noise by the light receiving member 24.

Returning to Fig. 1, the light receiving member 24 converts the distance measuring light RL of the return path into an electric signal. The light receiving member 24 is held by the supporting portion 36, and is fixed to the housing 12. The light receiving member 24 is fixed to the vicinity of the light source 14. Accordingly, in a case where the housing 12 is configured of a plurality of components, the light receiving member 24 also can be assembled to the same components of the light source 14 and the housing 12. The light receiving member 24 is, for example, disposed on the center shaft of the light condensing member 22. The light receiving member 24 may be disposed in the vicinity of a focal point which is on the center shaft of the light condensing member 22. The light receiving member 24 is, for example, a photodiode which converts the received light of an avalanche photodiode or the like into the electric signal. The light receiving member 24 receives the distance measuring light RL condensed by the light condensing member 22 after the distance measuring light RL is reflected by the distance measuring target and is reflected by the reflection member 18. The light receiving member 24 converts the distance measuring light RL into a light receiving signal which is the electric signal, and outputs the light receiving signal to the control portion 26.

The control portion 26 controls the entire distance measuring device 10. The control portion 26 includes an arithmetic unit which can perform an arithmetic operation, such as a CPU or a circuit, and a storage device which can store data. The control portion 26 controls the light source 14 and the driving member 48, obtains the light receiving signal from the light receiving member 24, and measures the distance to the distance measuring target, based on a condition set in advance.

Next, a distance measuring operation of the above-described distance measuring device 10 will be described.

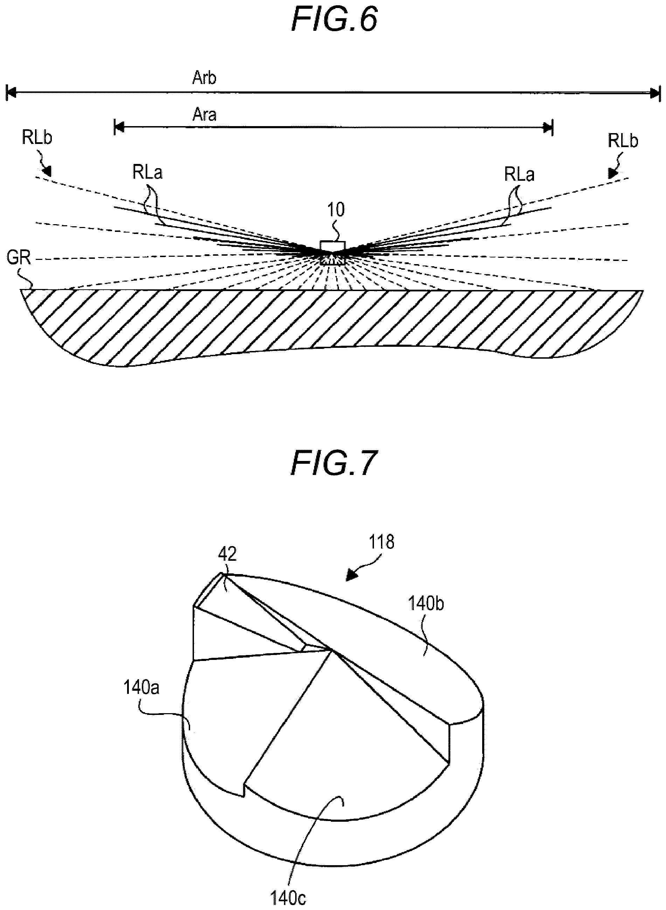

Fig. 5 is a plan view illustrating a trace and the distance measuring range of the distance measuring light RL. Fig. 6 is a front view illustrating the trance and the distance measuring range of the distance measuring light RL. Furthermore, Fig. 6 is a front view when the distance measuring device 10 is viewed from the distance measuring target. In Figs. 5 and 6, a solid line illustrates distance measuring light RLa reflected by the reflection surface 40a, and a dotted line illustrates distance measuring light RLb reflected by the reflection surface 40b.

The control portion 26 outputs the light projection signal to the light source 14. For example, the control portion 26 outputs the light projection signal in a shape of a pulse at a constant time interval. In addition, the control portion 26 outputs the driving signal to the driving member 48 of the rotating portion 20.

When obtaining the light projection signal at a constant time interval, the light source 14 projects the laser light which is the distance measuring light RL to the optical member 16 periodically at the time interval. The optical member 16 converts the distance measuring light RL projected by the light source 14 into the parallel light, and projects the parallel light to the direction to the reflection member 18. The distance measuring light RL transmits the transmissive portion 50 of the light condensing member 22, and reaches the reflection member 18.

Meanwhile, when obtaining the driving signal, the driving member 48 rotates the reflection member 18 around the rotating shaft 46 by rotating the rotating shaft 46.

The reflection member 18 reflects the distance measuring light RL converted into the parallel light by the optical member 16, by the reflection surfaces 40a and 40b. Here, since the reflection surfaces 40a and 40b of the reflection member 18 rotate around the rotating shaft 46, as illustrated in Fig. 5, the distance measuring light RL is reflected to a different position in the horizontal direction. Accordingly, the distance measuring device 10 measures the distance to the distance measuring target while moving the distance measuring light RL in the horizontal direction.

Here, the transmissive portion 50 is provided on the distance measuring target side in the outer circumferential portion of the light condensing member 22. Accordingly, since the reflection member 18 reflects the distance measuring light RL of the main path in the outer circumferential portion of the reflection surfaces 40a and 40b whose length in the circumferential direction is long, distance measuring ranges Ara and Arb in the horizontal direction can be enlarged.

The area of the reflection surface 40b is greater than the area of the reflection surface 40a. Therefore, the distance measuring range Arb caused by the distance measuring light RL reflected by the reflection surface 40b, is greater than the distance measuring range Ara caused by the distance measuring light RL reflected by the reflection surface 40a.

The inclination angle θa is greater than the inclination angle θb. Therefore, as illustrated in Fig. 6, the reflection surface 40b reflects the distance measuring light RL further downward than the reflection surface 40a at most of distance measuring positions. For example, the reflection surface 40b reflects the distance measuring light RL downward so that a part of the distance measuring light RL reaches a ground surface GR. Meanwhile, the reflection surface 40a reflects the distance measuring light RL upward, for example, so that the distance measuring light RL does not reach the ground surface GR, and to an extent that most of the distance measuring light RL are not above a height of a normal person.

The rotating shaft 46 is inclined with respect to the light projection direction of the distance measuring light RL projected by the light source 14. Therefore, an angle between the rotating reflection surface 40a and the distance measuring light RL changes. Similarly, an angle between the rotating reflection surface 40b and the distance measuring light RL changes. Accordingly, the distance measuring position caused by the distance measuring light RL reflected by the reflection surface 40a moves along the trace curved to protrude downward. Similarly, the distance measuring position caused by the distance measuring light RL reflected by the reflection surface 40b moves along the trace curved to protrude downward.

Since the transmissive portion 50 has a shape which is long in the radial direction of the light condensing member 22, the section of the transmitting distance measuring light RL has a shape which is long in the radial direction of the light condensing member 22. In other words, the transmissive portion 50 shortens the length of the section of the distance measuring light RL in the rotational direction of the reflection member 18, to be shorter than the length of the distance measuring light RL in the direction orthogonal to the rotational direction of the reflection member 18. Accordingly, the shape of the section of the distance measuring light RL along the surface perpendicular to the advancing direction, is long along the boundary between the reflection surfaces 40a and 40b and the correction surface 42, and is short in the direction orthogonal to the boundary. Accordingly, a time period during which the distance measuring light RL cannot measure the distance across the boundary is shortened.

The distance measuring light RL reaches the reflection member 18 after being reflected by the distance measuring target. The reflection member 18 reflects the distance measuring light RL to the light condensing member 22 by the reflection surface 40a or the reflection surface 40b. The light condensing member 22 condenses the distance measuring light RL, and projects the distance measuring light RL to the light receiving member 24. The light receiving member 24 converts the distance measuring light RL into the electric light receiving signal, and outputs the electric light receiving signal to the control portion 26.

The control portion 26 calculates the distance to the distance measuring target using a time period from the time when the light source 14 projects the distance measuring light RL and to the time when the light receiving member 24 receives the distance measuring light RL. In addition, the control portion 26 calculates the direction in which the distance measuring light RL reflected by the reflection surfaces 40a and 40b advances, and calculates the position and the height of the distance measuring target, from the rotation position of the reflection member 18.

As described above, in the distance measuring device 10, the optical member 16 is disposed at a position different from that of the transmissive portion 50 in the light projection direction. Accordingly, since it is not necessary to enlarge the size of the plane area of the transmissive portion 50 to be greater than the plane area of the optical member 16, for example, it is possible to make the plane area of the transmissive portion 50 smaller than the size of the distance measuring light RL to transmit. Therefore, in the light condensing member 22 in which the transmissive portion 50 is formed, since it is possible to enlarge the region in which the distance measuring light RL can be condensed, the light receiving member 24 receives more distance measuring light RL condensed by the light condensing member 22, and the distance measuring device 10 can improve the distance measuring performance.

In the distance measuring device 10, since the transmissive portion 50 is configured of the cutout, it is possible to easily provide the transmissive portion 50 in the outer circumferential portion of the light condensing member 22. Furthermore, by providing the transmissive portion 50 in the light condensing member 22, it is possible to make the course of the distance measuring light RL projected to the distance measuring target, and the course of the received distance measuring light RL, close to each other. Accordingly, the light condensing member 22 can receive the distance measuring light RL reflected by the distance measuring target with respect to wider region after transmitting the transmissive portion 50, can more efficiently receive the light, and can condense the light to the light receiving member 24. As a result, the distance measuring device 10 can improve the distance measuring performance of the distance measuring target on a far side where an amount of reflected distance measuring light RL is small, and can further reduce a blind area of a near distance region in which the distance measurement is difficult.

In the distance measuring device 10, since the optical member 16 suppresses the dispersion of the distance measuring light RL, it is possible to more efficiently use the distance measuring light RL.

In the distance measuring device 10, the transmissive portion 50 and the light shielding portion 52 which are configured of the cutout, shorten the length of the section of the distance measuring light RL in the rotational direction of the reflection member 18, to be shorter than the length of the section of the distance measuring light RL in the direction orthogonal to the rotational direction of the reflection member 18. Accordingly, since it is possible to shorten the time period during which the distance measuring light RL cannot measure the distance while acrossing the boundary of the reflection surfaces 40a and 40b, it is possible to further enlarge the range in which the distance can be measured.

As described above, in the distance measuring device 10, since the reflection surfaces 40a and 40b having different areas from each other are provided in the reflection member 18, it is possible to allow the distance measuring range Ara caused by the distance measuring light RL reflected by the reflection surface 40a, and the distance measuring range Arb caused by the distance measuring light RL reflected by the reflection surface 40b, to be different from each other. Accordingly, the distance measuring device 10 can improve a degree of freedom of the distance measuring range caused by each of the reflection surfaces 40a and 40b.

In the distance measuring device 10, since the rotating shaft 46 is inclined with respect to the light projection direction, it is possible to curve a scanning surface of the distance measuring light RL reflected by the reflection surfaces 40a and 40b that rotate around the rotating shaft 46, in the vertical direction. Furthermore, since the rotating shaft 46 is inclined in the vertical direction, and is inclined to the distance measuring target side, it is possible to curve the scanning surface of the distance measuring light RL in a projection shape which protrudes downward. Accordingly, the distance measuring device 10 can detect the distance measuring target on a front side and on a side by sweeping the distance measuring light RL one time in the horizontal direction, and can measure the distance by detecting the distance measuring target having a different height.

In the distance measuring device 10, since the rotating shaft 46 is inclined with respect to the light projection direction of the light source 14, and the scanning surface is curved, compared to a case where the light source 14 or the light receiving member 24 is inclined with respect to the rotating shaft 46, the inclination angle is small, and for example, can be a half. Accordingly, a small size of the distance measuring device 10 can be realized, and a jump-out amount from a vehicle in a case where the distance measuring device 10 is provided in the vehicle or the like, can be small.

In the distance measuring device 10, since the two reflection surfaces 40a and 40b are provided in the reflection member 18, compared to a case where three or more reflection surfaces are provided, the distance measuring range in the horizontal direction is enlarged, and the time period during which the distance cannot be measured across the boundary between the reflection surfaces 40a and 40b can be reduced.

### Modification Example 1

Fig. 7 is a perspective view of a reflection member 118 of Modification Example 1. As illustrated in Fig. 7, the reflection member 118 of Modification Example 1 includes three reflection surfaces 140a, 140b, and 140c, and the correction surface 42. The reflection surfaces 140a, 140b, and 140c have different areas. The reflection surfaces 140a, 140b, and 140c have different inclination angles which are angles between the reflection surfaces 140a, 140b, and 140c and the rotating shaft 46. The reflection member 118 of Modification Example 1 can sweep the distance measuring light RL at three locations in the direction intersecting (for example, orthogonal to) the scanning direction of the distance measuring light RL. Accordingly, the reflection member 118 can improve, for example, the distance measuring performance in the direction intersecting the scanning direction.

### Modification Example 2

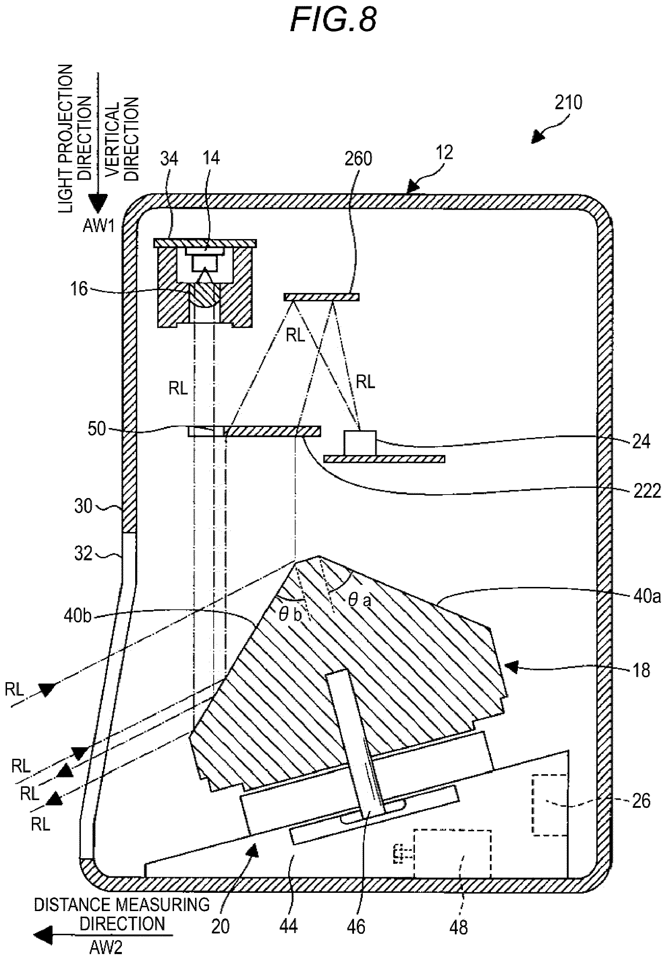

Fig. 8 is a sectional view illustrating the entire configuration of a distance measuring device 210 of Modification Example 2. As illustrated in Fig. 8, the distance measuring device 210 includes a light receiving reflection member 260. The light receiving reflection member 260 is, for example, a total reflection mirror. The light receiving reflection member 260 is disposed on the course of the distance measuring light RL condensed by a light condensing member 222 in the return path. The light receiving member 24 is disposed on the course of the distance measuring light RL reflected by the light receiving reflection member 260. In the distance measuring device 210 of Modification Example 2, the light receiving reflection member 260 reflects the distance measuring light RL condensed by the light condensing member 222 to the light receiving member 24. The light receiving member 24 converts the distance measuring light RL reflected by the light receiving reflection member 260 into the light receiving signal, and outputs the light receiving signal to the control portion 26.

In the distance measuring device 210 of Modification Example 2, it is possible to improve a degree of freedom of disposition of the light receiving member 24 by the light receiving reflection member 260. For example, by disposing the light receiving member 24 further toward the reflection member 18 side than the light source 14, it is possible to decrease the height of the distance measuring device 210, and to realize small size.

### Modification Example 3

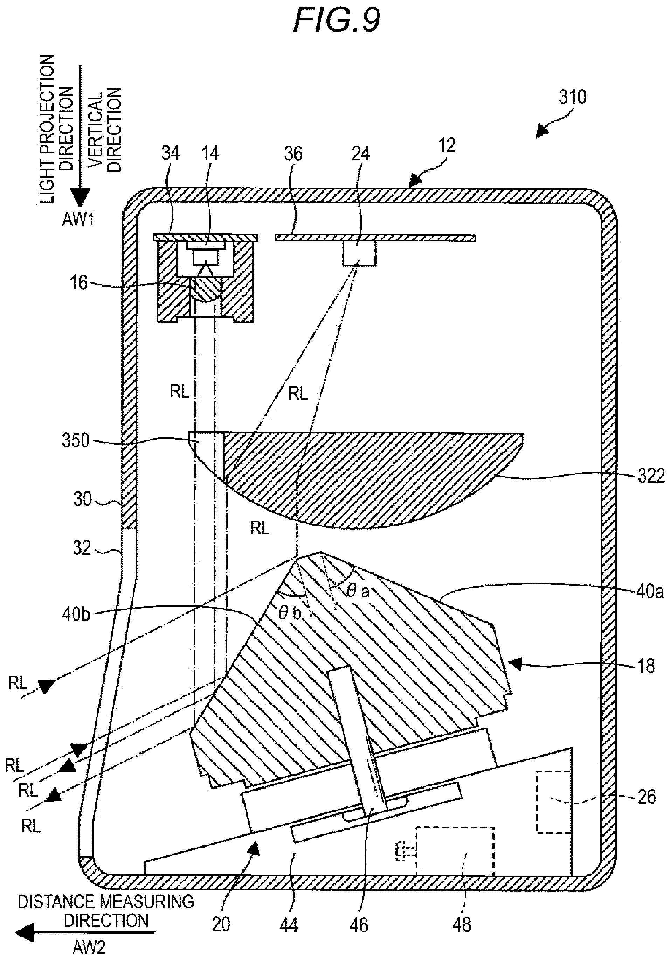

Fig. 9 is a sectional view illustrating the entire configuration of a distance measuring device 310 of Modification Example 3. As illustrated in Fig. 9, a light condensing member 322 may be configured of a projected lens in which a transmissive portion 350 is formed in the outer circumferential portion. The transmissive portion 350 is configured of the cutout obtained by removing a part of the outer circumferential portion of the light condensing member 322.

### First Example Useful for Understanding the Invention

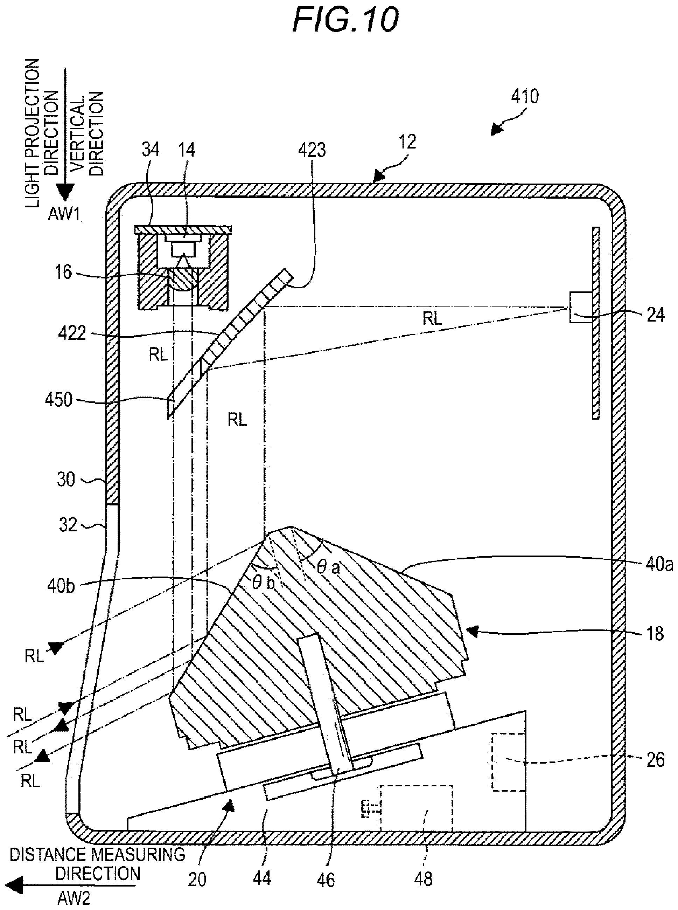

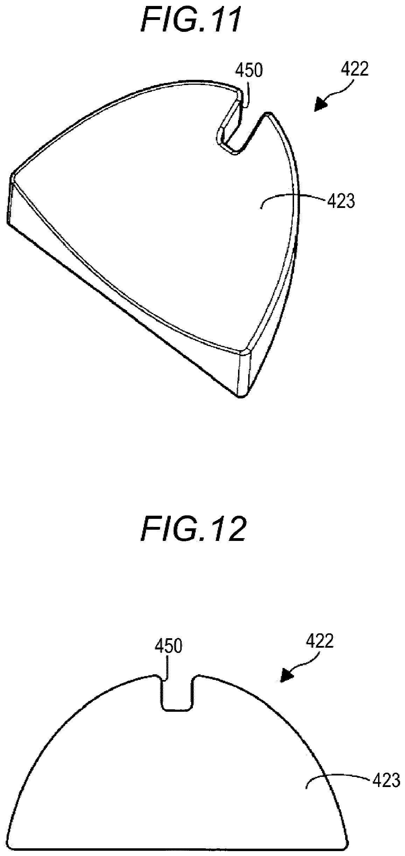

Fig. 10 is a sectional view illustrating the entire configuration of a distance measuring device 410 of a first example useful for understanding the invention. Fig. 11 is a perspective view of a light condensing member 422 of the first example useful for understanding the invention. Fig. 12 is a plan view of the light condensing member 422 of the first example useful for understanding the invention.

As illustrated in Fig. 10, the distance measuring device 410 of the first example useful for understanding the invention is provided with the light condensing member 422. As illustrated in Figs. 11 and 12, the light condensing member 422 has a light condensing mirror surface 423. The light condensing mirror surface 423 is configured of metal or the like having high reflectivity. The light condensing mirror surface 423 is configured of a curved surface. Accordingly, the light condensing mirror surface 423 condenses and reflects the distance measuring light RL toward the light receiving member 24. On the outer circumferential portion of the light condensing member 422, a transmissive portion 450 configured of the cutout is formed. The transmissive portion 450 allows the distance measuring light RL of the main path to transmit. In the first example useful for understanding the invention, the transmissive portion 450 is disposed at a position different from that of the optical member 16 in the light projection direction.

### Modification Example 4

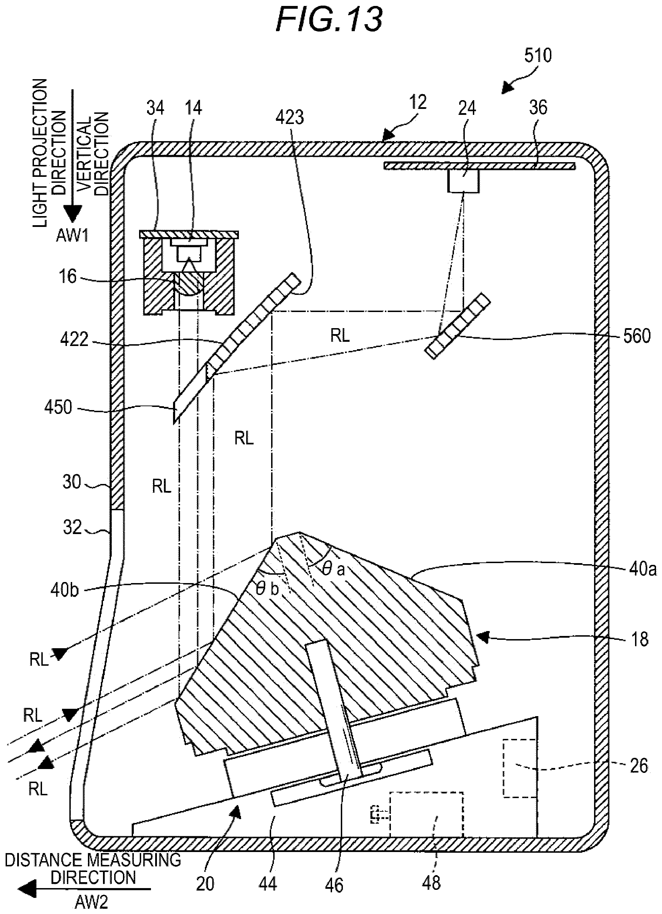

Fig. 13 is a sectional view illustrating the entire configuration of a distance measuring device 510 according to Modification Example 4. As illustrated in Fig. 13, the distance measuring device 510 according to Modification Example 4 includes a light receiving reflection member 560. The light receiving reflection member 560 is, for example, a total reflection mirror. The light receiving reflection member 560 is disposed on the course of the distance measuring light RL condensed by the light condensing member 422 in the return path. The light receiving member 24 is disposed on the course of the distance measuring light RL reflected by the light receiving reflection member 560.

In the distance measuring device 510 of Modification Example 4, the light receiving reflection member 560 reflects the distance measuring light RL which is reflected by the light condensing member 422 and condensed, to the light receiving member 24. The light receiving member 24 converts the distance measuring light RL reflected by the light receiving reflection member 560 into the light receiving signal, and outputs the light receiving signal to the control portion 26.

In the distance measuring device 510 of Modification Example 4, it is possible to improve a degree of freedom of disposition of the light receiving member 24 by the light receiving reflection member 560. For example, by disposing the light receiving member 24 in an available space, it is possible to realize a small size of the distance measuring device 510.

### Modification Example 5

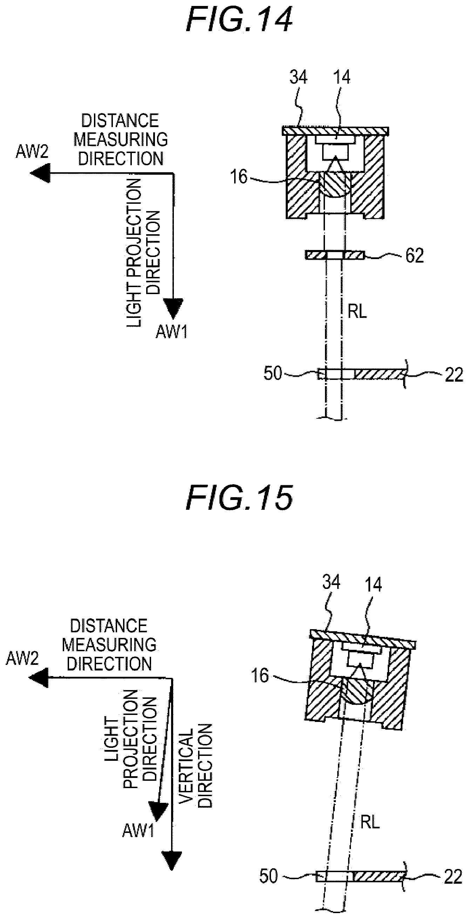

Fig. 14 is a view illustrating disposition of the light source 14 and a diaphragm 62 according to Modification Example 5. In the above-described first example useful for understanding the invention, the transmissive portion 50 and the light shielding portion 52 function as a diaphragm, but the diaphragm 62 may be provided separately. For example, the diaphragm 62 is disposed between the optical member 16 and the transmissive portion 50 of the light condensing member 22, and on the course of the distance measuring light RL of the main path. The diaphragm 62 narrows down the distance measuring light RL so that the length of the section of the distance measuring light RL in the rotational direction of the reflection member 18 having the plurality of reflection surfaces 40a and 40b, is shorter than the length of the section of the distance measuring light RL in the direction orthogonal to the rotational direction.

### Modification Example 6

Fig. 15 is a view illustrating the light source 14 according to Modification Example 6. As illustrated in Fig. 15, the light source 14 may project the distance measuring light RL in the light projection direction inclined with respect to the vertical direction. For example, the light source 14 may be inclined with respect to the vertical direction, and may project the distance measuring light RL in the light projection direction inclined in the direction to the distance measuring target. In this case, the rotating shaft 46 may be parallel to the vertical direction, and may be inclined. Accordingly, for example, in a case where the rotating shaft 46 is disposed in parallel to the vertical direction, it is possible to suppress damage of the rotating portion 20 according to the rotation.

### Modification Example 7

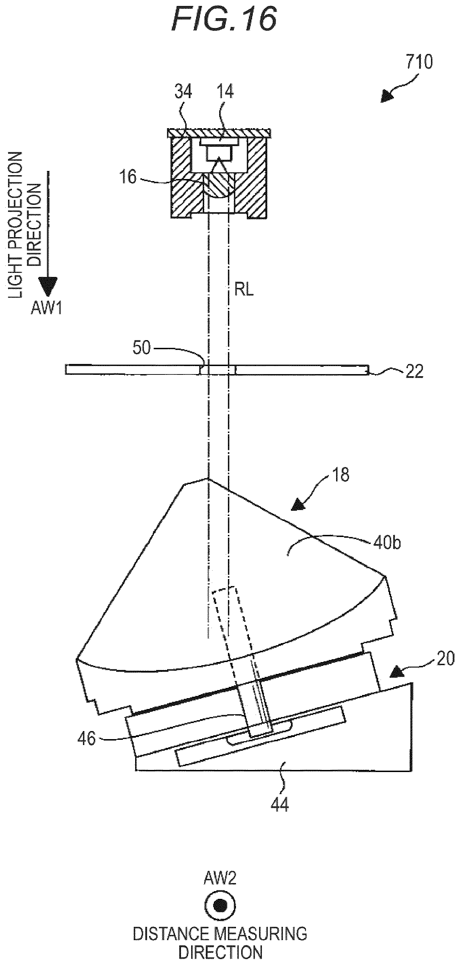

Fig. 16 is a view illustrating the rotating shaft 46 of the rotating portion 20 according to Modification Example 7. Fig. 16 is a view of main portions of a distance measuring device 710 when viewed from the distance measuring target side. The rotating shaft 46 of the rotating portion 20 may be inclined in the direction intersecting (for example, orthogonal to) the distance measuring direction. Accordingly, the distance measuring device 710 can make a scanning line of the distance measuring light RL to be in a shape of a curved line, for example, which rises diagonally up and to the left and right, and can bias the distance measuring range of the distance measuring light in any direction intersecting the distance measuring direction. For example, in a case where the two distance measuring devices 710 are provided on the left side and on the right side of a front end of the vehicle, the distance measuring range of the distance measuring device 710 provided on the left side can be biased to the front left side of the vehicle, and the distance measuring range of the distance measuring device 710 provided on the right side can be biased to the front right side of the vehicle. As a result, it is possible to reduce the overlapping left and right distance measuring ranges of the distance measuring device 710, and to widen the distance measuring range caused by the two distance measuring devices 710. Furthermore, the light projection direction of the light source 14 may be inclined in the direction intersecting (for example, orthogonal to) the distance measuring direction.

### Second Example Useful for Understanding the Invention

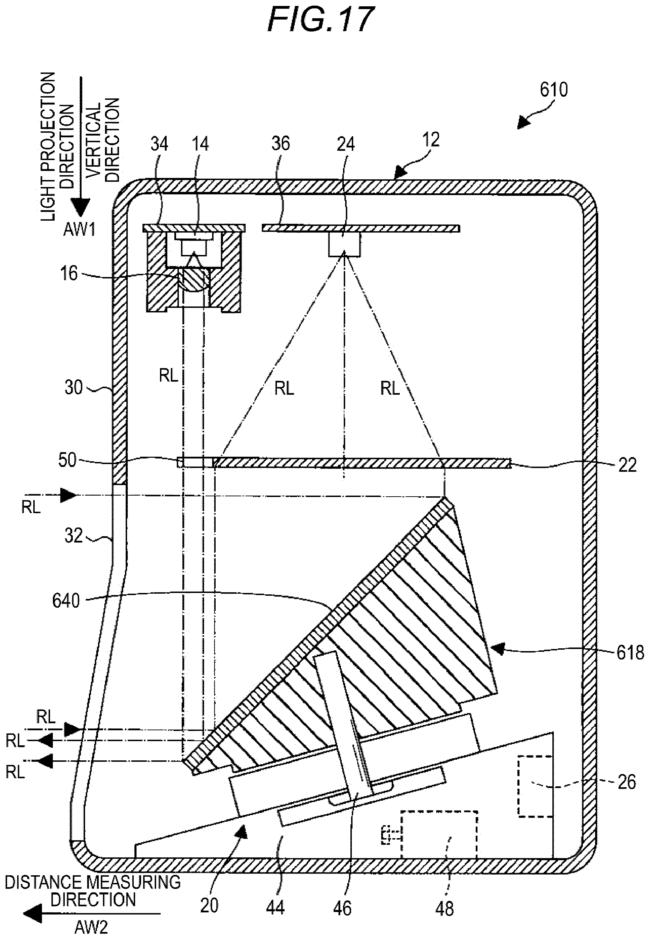

Fig. 17 is a sectional view illustrating the entire configuration of a distance measuring device 610 of a second example useful for understanding the invention. As illustrated in Fig. 17, the distance measuring device 610 of the second example useful for understanding the invention is provided with a reflection member 618. The reflection member 618 includes one reflection surface 640. Accordingly, the distance measuring device 610 can simplify the configuration of the reflection member 618.

The embodiments and the modification examples of the disclosure are described, but the embodiments and the modification examples are described as examples, and do not limit the range of the disclosure. The new embodiments and the modification examples can be realized in other various aspects, and in a range without departing from the scope of the disclosure, various omissions, replacements, and changes are possible. The embodiments or the modifications are included in the range or scope of the disclosure, and are included in a range which is equivalent to the disclosure described in the range of the appended claims.

The disposition, the shape, and the number of configuration members in each of the above-described embodiments, examples useful for understanding the invention, and the modification examples, may be appropriately changed. In addition, each of the embodiments, examples useful for understanding the invention, and modification examples may be appropriately combined with each other.

In the above-described embodiments, examples useful for understanding the invention, and the modification examples, an example in which the control portion 26 is provided on the inside of the distance measuring device 10 is illustrated, but the control portion 26 may be provided on the outside of the distance measuring device 10, and may be provided to be separated from the distance measuring device 10.

In the above-described embodiments, examples useful for understanding the invention, and the modification examples, the transmissive portion 50 is configured as a cutout, but the transmissive portion 50 may be configured, for example, to allow the distance measuring light RL to transmit therethrough without adding the optical action, such as refraction. Therefore, the transmissive portion 50 may be configured of a material which allows the light, in which both surfaces have a surface perpendicular to the light projection direction (that is, the advancing direction) of the distance measuring light RL, to be capable of transmitting therethrough.

In the above-described embodiments, examples useful for understanding the invention, and the modification examples, an example in which the light condensing members 22, 322, and 422 are configured of a Fresnel lens, a projected lens, and a light condensing mirror, is illustrated, but the light condensing member may be configured of other optical components which can condense the light. For example, the light condensing member may be configured of a dioptric lens or a free curved surface lens.

In the above-described embodiments, examples useful for understanding the invention, and the modification examples, an example in which the reflection member has one to three reflection surfaces, is described, but the reflection member may have four or more reflection surfaces. In addition, in a case where the reflection member has a plurality of reflection surfaces, it is preferable that a balance is adjusted by the area or the like of the reflection surface to an extent that rotational unevenness and vibration are not generated in the rotation operation due to the driving member, such as a motor.

In the above-described embodiment and examples useful for understanding the invention, the light source having a laser device is described as an example, but a light emitting diode (LED) or the like may be provided in the light source.

The principles, preferred embodiments and modes of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention as defined in the claims. Accordingly, it is expressly intended that all such variations, changes and equivalents which fall within scope of the present invention as defined in the claims, be embraced thereby.

## Claims

1. A distance measuring device (10, 210, 310, 410, 510, 610, 710) comprising:
a housing (12);
a light source (14) which is provided in the housing, and is configured to project distance measuring light (RL);
an optical member (16) which is provided in the housing, and is configured to apply optical action to the distance measuring light projected by the light source;
a reflection member (18) which is supported to be rotatable, and has a reflection surface (40a, 40b) which is configured to reflect the distance measuring light that passes through the optical member to the outside of the housing;
a light condensing member (22) which has a transmissive portion (50, 350, 450) that is disposed at a position different from that of the optical member in the light projection direction of the distance measuring light projected by the light source, and is configured to allow transmission of the distance measuring light, and which is configured to condense the distance measuring light which is reflected by a distance measuring target outside of the housing, and reflected by the reflection surface; and
a light receiving member (24) which is configured to receive the distance measuring light condensed by the light condensing member, and is configured to convert the distance measuring light into an electric signal;
**characterized in that**
the reflection member has a plurality of reflection surfaces, and
wherein the distance measuring device further comprises a diaphragm which shortens a length of a section of the distance measuring light in the rotational direction of the reflection member, which is the circumferential direction of the reflection member in a plan view, to be shorter than a length of the distance measuring light in the direction orthogonal to the rotational direction, the direction orthogonal to the rotational direction being the radial direction of the reflection member in a plan view.

2. The distance measuring device according to claim 1,
wherein the transmissive portion is a cutout provided in an outer circumferential portion of the light condensing member.

3. The distance measuring device according to claim 1 or 2,
wherein the optical member is a lens which is configured to suppress dispersion of the distance measuring light.

4. The distance measuring device according to claim 2,
wherein the reflection member has a plurality of reflection surfaces, wherein a light shielding portion (52) which is provided on the periphery of the transmissive portion, and is configured to shield the distance measuring light, is further provided, and
wherein the light shielding portion and the transmissive portion shorten a length of a section of the distance measuring light in the rotational direction of the reflection member, which is the circumferential direction of the reflection member in a plan view, to be shorter than a length of the distance measuring light in the direction orthogonal to the rotational direction, the direction orthogonal to the rotational direction being the radial direction of the reflection member in a plan view.

## Patentansprüche

1. Entfernungserfassungsvorrichtung (10, 210, 310, 410, 510, 610, 710), mit:
einem Gehäuse (12);
einer Lichtquelle (14), die in dem Gehäuse bereitgestellt und dazu eingerichtet ist, ein Entfernungserfassungslicht (RL) zu projizieren;
einem Optikbauteil (16), das in dem Gehäuse bereitgestellt und dazu eingerichtet ist, eine optische Wirkung auf das durch die Lichtquelle projizierte Entfernungserfassungslicht auszuüben;
einem Reflektionsbauteil (18), das rotierbar unterstützt ist und eine Reflektionsoberfläche (40a, 40b) aufweist, die zu einer Reflektion des Entfernungserfassungslichtes eingerichtet ist, das das Optikbauteil zu der Außenseite des Gehäuses hin durchläuft;
einem Lichtsammelbauteil (22), das einen durchlässigen Abschnitt (50, 350, 450) aufweist, der an einer von der des Optikbauteils verschiedenen Position in der Lichtprojektionsrichtung des durch die Lichtquelle projizierten Entfernungserfassungslichtes angeordnet und der dazu eingerichtet ist, eine Transmission des Entfernungserfassungslichtes zu ermöglichen, und das dazu eingerichtet ist, das Entfernungserfassungslicht zu sammeln, das durch ein Entfernungserfassungsziel außerhalb des Gehäuses und durch die Reflektionsoberfläche reflektiert ist; und
einem Lichtempfangsbauteil (24), das dazu eingerichtet ist, das durch das Lichtsammelbauteil gesammelte Entfernungserfassungslicht zu empfangen, und dazu eingerichtet ist, das Entfernungserfassungslicht in ein elektrisches Signal umzuwandeln;
**dadurch gekennzeichnet, dass**
das Reflektionsbauteil eine Vielzahl von Reflektionsoberflächen aufweist und
wobei die Entfernungserfassungsvorrichtung ferner eine Membrane umfasst, die eine Länge einer Sektion des Entfernungserfassungslichtes in der Rotationsrichtung des Reflektionsbauteils verkürzt, die bei einer Draufsicht die Umfangsrichtung des Reflektionsbauteils ist, um kürzer als eine Länge des Entfernungserfassungslichtes in der zu der Rotationsrichtung orthogonalen Richtung zu sein, wobei bei einer Draufsicht die zu der Rotationsrichtung orthogonale Richtung die radiale Richtung des Reflektionsbauteils ist.

2. Entfernungserfassungsvorrichtung nach Anspruch 1,
wobei der durchlässige Abschnitt ein in einem Außenumfangsabschnitt des Lichtsammelbauteils bereitgestellter Ausschnitt ist.

3. Entfernungserfassungsvorrichtung nach Anspruch 1 oder 2,
wobei das Optikbauteil eine Linse ist, die dazu eingerichtet ist, eine Dispersion des Entfernungserfassungslichtes zu unterdrücken.

4. Entfernungserfassungsvorrichtung nach Anspruch 2,
wobei das Reflektionsbauteil eine Vielzahl von Reflektionsoberflächen aufweist,
wobei ferner ein Lichtabschirmabschnitt (52) bereitgestellt ist, der auf dem Umfang des durchlässigen Abschnitts bereitgestellt und dazu eingerichtet ist, das Entfernungserfassungslicht abzuschirmen, und
wobei der Lichtabschirmabschnitt und der durchlässige Abschnitt eine Länge einer Sektion des Entfernungserfassungslichtes in der Rotationsrichtung des Reflektionsbauteils verkürzen, die bei einer Draufsicht die Umfangsrichtung des Reflektionsbauteil ist, um kürzer als eine Länge des Entfernungserfassungslichtes in der zu der Rotationsrichtung orthogonalen Richtung zu sein, wobei bei einer Draufsicht die zu der Rotationsrichtung orthogonale Richtung die radiale Richtung des Reflektionsbauteils ist.

## Revendications

1. Dispositif de mesure de distance (10, 210, 310, 410, 510, 610, 710) comprenant :
une enceinte (12) ;
une source de lumière (14) qui est prévue dans l'enceinte, et est configurée pour projeter une lumière de mesure de distance (RL) ;
un élément optique (16) qui est prévu dans l'enceinte, et est configuré pour appliquer une action optique sur la lumière de mesure de distance projetée par la source de lumière ;
un élément de réflexion (18) qui est supporté pour pouvoir tourner, et possède une surface réfléchissante (40a, 40b) qui est configurée pour réfléchir la lumière de mesure de distance qui passe par l'élément optique vers l'extérieur de l'enceinte ;
un élément de condensation de lumière (22) qui possède une partie transmissive (50, 350, 450) qui est disposée à un emplacement différent de celui de l'élément optique dans la direction de projection de lumière de la lumière de mesure de distance projetée par la source de lumière, et est configurée pour permettre la transmission de la lumière de mesure de distance, et qui est configurée pour condenser la lumière de mesure de distance qui est réfléchie par une cible de mesure de distance à l'extérieur de l'enceinte, et réfléchie par la surface réfléchissante ; et
un élément de réception de lumière (24) qui est configuré pour recevoir la lumière de mesure de distance condensée par l'élément de condensation de lumière, et est configuré pour convertir la lumière de mesure de distance en un signal électrique ;
**caractérisé en ce que**
l'élément de réflexion possède une pluralité de surfaces réfléchissantes, et
dans lequel le dispositif de mesure de distance comprend en outre un diaphragme qui réduit une longueur d'une section de la lumière de mesure de distance dans la direction de rotation de l'élément de réflexion, qui est la direction circonférentielle de l'élément de réflexion sur une vue de dessus, de sorte qu'elle soit plus courte qu'une longueur de la lumière de mesure de distance dans la direction orthogonale par rapport à la direction de rotation, la direction orthogonale par rapport à la direction de rotation étant la direction radiale de l'élément de réflexion sur une vue de dessus.

2. Dispositif de mesure de distance selon la revendication 1,
dans lequel la partie transmissive est une découpe prévue dans une partie circonférentielle externe de l'élément de condensation de lumière.

3. Dispositif de mesure de distance selon la revendication 1 ou 2,
dans lequel l'élément optique est une lentille qui est configurée pour supprimer la dispersion de la lumière de mesure de distance.

4. Dispositif de mesure de distance selon la revendication 2,
dans lequel l'élément de réflexion possède une pluralité de surfaces réfléchissantes,
dans lequel une partie de protection contre la lumière (52) qui est prévue sur la périphérie de la partie transmissive, et est configurée pour protéger la lumière de mesure de distance, est en outre prévue, et
dans lequel la partie de protection contre la lumière et la partie transmissive réduisent une longueur d'une section de la lumière de mesure de distance dans la direction de rotation de l'élément de réflexion, qui est la direction circonférentielle de l'élément de réflexion sur une vue de dessus, afin qu'elle soit plus courte qu'une longueur de la lumière de mesure de distance dans la direction orthogonale par rapport à la direction de rotation, la direction orthogonale par rapport à la direction de rotation étant la direction radiale de l'élément de réflexion sur une vue de dessus.
